(19) Europäisches Patentamt
European Patent Office
Office européen des brevets

(11) EP 0 577 931 B1

(12) EUROPÄISCHE PATENTSCHRIFT

(45) Veröffentlichungstag und Bekanntmachung des Hinweises auf die Patenterteilung:
**24.06.1998 Patentblatt 1998/26**

(51) Int Cl.[6]: **E21B 33/138**, E21B 43/25, E21B 43/02, E21B 43/32

(21) Anmeldenummer: **93105664.2**

(22) Anmeldetag: **06.04.1993**

(54) **Verfahren zur Verringerung oder vollständigen Einstellung des Wasserzuflusses bei Bohrungen zur Gewinnung von Öl und/oder Kohlenwasserstoffgas**

Process for reducing or complete setting of water production during drilling for oil and/or hydrocarbon gas recovery

Procédé pour la réduction ou la prédisposition complète de la production d'eau pendant le forage pour la récupération d'huile et/ou gaz d'hydrocarbures

(84) Benannte Vertragsstaaten:
**DE DK GB NL**

(30) Priorität: **10.04.1992 DE 4212210**

(43) Veröffentlichungstag der Anmeldung:
**12.01.1994 Patentblatt 1994/02**

(73) Patentinhaber: **Clariant GmbH**
**65929 Frankfurt am Main (DE)**

(72) Erfinder:
- **Pusch Günther, Prof. Dr.**
  **D-29227 Celle (DE)**
- **Ranjbar Mohammad, Dr.**
  **D-38678 Clausthal-Zellerfeld (DE)**

(56) Entgegenhaltungen:
**EP-A- 0 023 712**
**EP-A- 0 044 508**
**EP-A- 0 156 031**
**FR-A- 2 224 636**
**US-A- 4 842 071**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 577 931 B1

**Beschreibung**

Die vorliegende Erfindung betrifft ein Verfahren zur Verringerung oder zur vollständigen Einstellung von Wasserzuflüssen bei einer unterirdischen Formation, die Kohlenwasserstoffe enthält, zu der Produktionsbohrung. Mit diesem Verfahren wird die Absperrung von Wasser verwirklicht, ohne deshalb den Durchgang von Öl und/oder von Kohlenwasserstoffgas zu der Bohrung zu verringern.

Oft existiert Wasser als Salzlösung in derselben Formation wie Öl oder Gas. Die Gewinnung von Öl oder von Kohlenwasserstoffgas bringt also die Gewinnung von Wasser in einer solchen Menge mit sich, daß sie beträchtliche Probleme aufwirft; sie verursacht direkt oder indirekt Ablagerung von Salzen in der Nachbarschaft der Bohrung oder in der Bohrung selbst, sie vergrößert beträchtlich die Korrosion aller Metallteile untertage oder übertage, sie vergrößert ohne Nutzen die Mengen der gepumpten, übergeführten und gelagerten Flüssigkeiten und sie schafft mit dem Öl Emulsionen, die schwierig übertage zu brechen sind und die untertage in den Hohlräumen der Formation Blockierungen bilden.

Gemäß dem Stand der Technik sind zahlreiche Verfahren vorgeschlagen und ausgeübt worden, die dazu bestimmt sind, die Wasserzuflüsse in die Bohrungen zur Gewinnung von Öl oder Kohlenwasserstoffgas zu verringern. Sie bestehen oft darin, in der Formation zwischen dem Wasser und der Bohrung oder zwischen dem Wasser und dem Öl oder Kohlenwasserstoffgas eine undurchdringliche Sperre einzubringen. Die gewöhnlich eingebrachten Mittel blockieren fast ebenso viel Öl oder Kohlenwasserstoffgas wie Wasser. Die Bestandteile dieser Sperrung können sein: Zement, Harze, Suspensionen von festen Teilen, Paraffine oder wasserlösliche Polymere, die durch Einbringen von sogenannten Vernetzern (cross-linker) in der Lagerstätte vernetzt werden.

Zur Zeit verwendet man Polymere, die in Lösung in das poröse Milieu eingebracht werden, an der Oberfläche des Feststoffes adsorbiert werden und in den Porenraum hineinragen, so daß sie sich dafür eignen, die Wasserzuflüsse durch Reibung zu verringern. Im Gegensatz dazu passieren die nicht wäßrigen Fluide, wie Öl oder vor allem Kohlenwasserstoffgas die adsorbierten Makromoleküle, die nun ein vernachlässigbares Volumen an der Wand einnehmen und so den Durchgang vollständig freilassen.
Aus US-A-4 095 651 ist die Verwendung von hydrolysierten Polyacrylamiden bekannt. Es hat sich jedoch gezeigt, daß dieser Polymertyp hauptsächlich gegenüber Wasser mit geringem Salzgehalt wirksam ist und durch das Wasser mit höherem Salzgehalt abgebaut wird. Bei höheren Temperaturen neigen diese Polymeren in Gegenwart von mehrwertigen Ionen zur Bildung von Niederschlägen, die die Poren der Gesteinsformationen verstopfen können.
Aus US-A-4 718 491 ist die Verwendung von Polysacchariden bekannt. Diese Verbindungen, die schlecht in den Porenraum injizierbar sind, bewirken zwar eine Verzögerung oder Verminderung des Wasserzuflusses, lassen aber nur einen unvollständigen Abbau der vorhandenen Lagerstätten zu, bzw. Verlieren bei höheren Temperaturen ihr Wirkung.
Aus US-A-4 842 071 ist die Verwendung von nicht-hydrolysierten Acrylamidpolymeren oder -copolymeren bekannt, die durch nachträgliches Einbringen einer wäßrig-basischen Lösung hydrolysiert werden. Dieses Verfahren besitzt Nachteile hinsichtlich eines zusätzlichen Arbeitsaufwandes durch das Einbringen einer weiteren Lösung, sowie durch die Problematik der Erreichbarkeit der injizierten Polymerlösung durch das Nachlegen der basischen Lösung und im Hinblick auf eine erhöhte Korrosionsanfälligkeit der eingesetzten Geräte. Zudem ist die Wirksamkeit der Polymerlösung nur bei erfolgter Umsetzung mit der wäßrigbasischen Lösung gegeben, wobei der Grad der Wirksamkeit durch den Umsetzungsgrad bestimmt wird.

Aufgabe der Erfindung ist es, ein Verfahren zur Verringerung des Wasserzuflusses in Produktionsbohrungen zur Verfügung zu stellen, ohne die Gewinnung von Öl oder Kohlenwasserstoffgas zu vermindern.

Überraschenderweise hat sich gezeigt, daß wasserlösliche Copolymere auf Basis von Acrylamidoalkylensulfonsäure, Vinylacetamid und gegebenenfalls weiterer Monomere sich durch eine hohe Adsorption an den Gesteinen der Lagerstätte auszeichnen, ein elastisches Dehn-Stauchverhalten besitzen, eine besondere Stabilität gegenüber Salzen in Lagerstättenwassern zeigen und über einen breiten Temperaturbereich, insbesondere bei höheren Temperaturen, eingesetzt werden können.

Das erfindungsgemäße Verfahren darf nicht mit dem Verfahren zur tertiären Gewinnung von Öl verwechselt werden, gemäß dem eine Polymerlösung, die im allgemeinen eine schwache Konzentration besitzt (einige 100 ppm) durch eine oder mehrere Injektionsbohrungen eingebracht wird, und zwar mit einem ausreichenden Druck, damit die Lösung in die Formation eindringt und einen Teil des Öles dieser Formation ersetzt, das sodann mit einer anderen Reihe von Produktionsbohrungen gewonnen wird. Die eingebrachten Mengen sind in der Größenordnung des Volumens der Formation. Es ist wohlbekannt, daß polymerhaltiges Wasser für dieses Gewinnungsverfahren viel wirksamer ist, da es viskoser ist als das Lagerstättenwasser.

Das erfindungsgemäße Verfahren darf weiterhin nicht mit dem Verfahren verwechselt werden, das darin besteht, ein Polymer zu Bohrflüssigkeiten zuzufügen. Diese Flüssigkeiten haben den Zweck, das Bohrwerkzeug zu schmieren, das Austragen der Gesteinsbruchstücke zu ermöglichen, einen Gegendruck auszuüben, der merklich gleich zu dem Formationsdruck Untertage ist und eine Aufschlämmung auf den Wänden der Bohrung zu bewirken. Sie zirkulieren in einem geschlossenen Kreislauf zwischen dem Boden und der Oberfläche, wo sie filtriert werden und ihre Zusammensetzung nachgeregelt wird. Die verwendeten Mengen sind gering, und zwar in der Größenordnung des Volumens der Bohrung.

Das erfindungsgemäße Verfahren, dessen Ziel es ist, die Wasserzuflüsse in einer Bohrung im Laufe der Produktion zu reduzieren, besteht darin, in die Lagerstätte - ausgehend von dieser Bohrung - eine Menge einer Polymerlösung einzubringen.

Gegenstand der Erfindung ist ein Verfahren zur Verringerung oder vollständigen Einstellung der Wasserzuflüsse aus einer Lagerstätte in mindestens einem Teil einer Bohrung zur Gewinnung von Öl und/oder Kohlenwasserstoffgas, die eine Lagerstätte durchquert, wobei man ausgehend von dieser Bohrung in den Teil der Lagerstätte, in dem man die Wasserzuflüsse reduzieren oder einstellen will, eine wäßrige Lösung eines Copolymers einbringt, und anschließend die Bohrung zur Gewinnung von Öl und/oder Kohlenwasserstoffgas in Betrieb nimmt, wobei die Fluide, die in der Lagerstätte vorhanden sind mit dem genannten, das adsorbierte Polymer enthaltenden Teil der Lagerstätte in Kontakt kommen und das Öl und/oder das Kohlenwasserstoffgas diesen Teil der Lagerstätte durchströmt und in die Bohrung gelangt, während der Durchgang für Wasser der Lagerstätte reduziert wird, dadurch gekennzeichnet, daß die wäßrige Lösung ein Copolymer enthält, das 5 - 90 Gew..-% Struktureinheiten der Formel

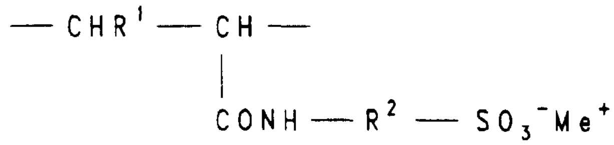

(I)

worin

$R^1$ Wasserstoff oder Methyl,
$R^2$ $C_2$-$C_{10}$-Alkylen, bevorzugt $C_2$-$C_6$-Alkylen, besonders bevorzugt $C_4$-Alkylen und
Me Ammonium oder ein Alkalimetallion bedeutet,

5 - 95 Gew.-% Struktureinheiten der Formel

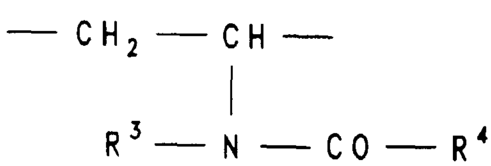

(II)

worin
$R^3$ und $R^4$ unabhängig voneinander Wasserstoff, Methyl oder Ethyl oder $R^3$ und $R^4$ zusammen eine Propylengruppe, die unter Einschluß eines Restes

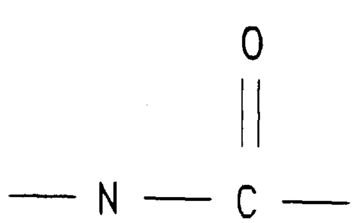

einen Pyrrolidonrest bildet, bedeutet,
0 - 90 Gew.-% Struktureinheiten der Formel

$$— CH = CH — CH_2 — \overset{+}{N}R^5R^6 — CH_2 — CH = CH — X^- \quad (III)$$

worin

X ein Halogen, vorzugsweise Chlorid
$R^5$ und $R^6$ unabhängig voneinander $C_1$-$C_6$-Alkyl, vorzugsweise $C_1$-$C_3$-Alkyl, insbesondere Methyl oder Ethyl bedeuten und

0 - 90 Gew.-% Struktureinheiten der Formel

$$— CHR^7 — CHR^8 —$$

worin

$R^7$ Wasserstoff oder Methyl und
$R^8$ $CONH_2$, $CON(CH_3)_2$, Cyano, $SO_3H$, $SO_3Me$, $C_6H_4SO_3H$, $C_6H_4SO_3Me$, $CH_2SO_3H$, $CH_2SO_3Me$, COOH, COOMe oder eine Estergruppe COOR, wobei R für $C_1$-$C_{15}$-Alkyl, vorzugsweise $C_1$-$C_8$-Alkyl steht, enthält.

Bevorzugte wasserlösliche Copolymere bestehen aus

40 - 90 Gew.-% Struktureinheiten der Formel (I),
10 - 60 Gew.-% Struktureinheiten der Formel (II) und
0 - 40 Gew.-% Struktureinheiten der Formel (III).

Geeignete Copolymere enthalten die Monomeren 2-Acrylamido-2-methyl-propansulfonsäure (AMPS), Diallyldimethylammoniumchlorid (DADMAC), N-Vinyl-N-methylacetamid (VIMA), N-Vinylpyrrolidon (VIPY), Acrylamid (AM), Vinylacetamid (VA) und Vinylformamid (VF).

Beispielhaft sind Copolymere mit 40 - 70 Gew.-% 2-Acrylamido-2-methyl-propansulfonsäure-(3), - 10 30 Gew.-% Vinylacetamid und 0 - 60 Gew.-% Acrylamid oder 5 - 60 Gew.-% 2-Acrylamido-2-methyl-propansulfonsäure oder Vinylsulfonsäure, 2 - 20 Gew.-% Vinylacetamid und 45 - 90 Gew.-% Acrylamid.

Die Molekulargewichte der eingesetzten Copolymeren betragen 50 000 bis $20 \cdot 10^6$. Die Molekulargewichte für Copolymere mit niederem Molekulargewicht liegen im Bereich zwischen 50 000 und $3 \cdot 10^6$, vorzugsweise 200 000 - $1 \cdot 10^6$. Copolymere mit hohem Molekulargewicht besitzen Molekulargewichte im Bereich von mehr als $3 \cdot 10^6$ bis $20 \cdot 10^6$.

Es hat sich gezeicht, daß bei Gesteinen mit geringer Durchlässigkeit (Permeabilität) der Einsatz von Copolymeren mit niederem Molekulargewicht von Vorteil ist. Derartige Copolymere lassen sich leicht injizieren und dringen im Vergleich zu Copolymeren mit hohem Molekulargewicht und gleicher Viskosität tiefer in Gesteine mit kleinem Porendurchmesser ein, ohne daß allzu hohe Drucke erforderlich sind.

Die verwendeten wasserlöslichen Copolymere sowie Verfahren zu deren Herstellung werden in EP-A-044 508, EP-A-023 712 und der nicht vorveröffentlichten europäischen Patentanmeldung Nr. 483 638 genannt.

Die Konzentration der wäßrigen Polymerlösung kann innerhalb großer Bereiche gewählt werden und liegt vorzugsweise zwischen 100 und 20 000 ppm in Gewichtsanteilen. Die Menge des Copolymers, die man in die Produktionszone um die Bohrung einbringt, hängt von den örtlichen Bedingungen ab. In den meisten Fällen beträgt sie 50 bis 5000 kg und vorzugsweise 200 bis 1000 kg pro vertikalen Meter der behandelten Zone. Als weiteren Bestandteil kann die Polymerlösung eines oder mehrere Salze von Alkali- oder Erdalkalimetallen, insbesondere NaCl, KCl, $MgCl_2$, $MgSO_4$, $CaCl_2$, $Na_2SO_4$, $K_2SO_4$ und/oder $NaNO_3$, und allgemein von Chloriden, Sulfaten oder Nitraten von Metallen, wie z.B. Natrium, Kalium, Calcium oder Magnesium enthalten. Man bevorzugt Lösungen, die wenigstens zum größeren Teil Natriumchlorid enthalten. Die Salze der Erdalkalimetalle sind weniger wünschenswert, insbesondere in größeren Mengen, da sie unerwünschte Niederschläge erzeugen können, z.B. wenn das Milieu Carbonate enthält oder einen pH-Wert besitzt der gleich oder höher als 9 ist.

Ebenso ist es ratsam, die Anwesenheit von wesentlichen Mengen anderer Metallionen als von Alkali- oder Erdalkalimetallen zu vermeiden, da solche Ionen mit gewissen Polymeren eine Vernetzung ermöglichen können, die zu einer vollständigen Abdichtung der behandelten Zone führen kann.

Die Konzentration an Salzen der salzhaltigen Polymerlösung kann innerhalb großer Bereiche gewählt werden. Sie hängt von der Natur und der Konzentration an Salz des Wassers der Lagerstätte ab und auch von der Natur des Salzes, das in der Polymerlösung vorhanden ist, so daß es nicht möglich ist, einen allgemeinen Bereich der verwendbaren Werte anzugeben. Ein einfacher vorheriger Versuch ermöglicht es die beste Konzentration an Salz zu ermitteln. Als allgemeine Regel gilt, daß die Salze der Alkalimetalle in stärkerer Konzentration verwendet werden müssen, als die Salze der Erdalkalimetalle. Relativ hohe Konzentrationen sind im allgemeinen besonders günstig, z.B. für den Fall von Natriumchlorid mindestens 20 g/l und vorzugsweise mindestens 75 g Salz/l Wasser, insbesondere 100 bis 200 g/l. Calciumchlorid verwendet man gewöhnlich mit einer Konzentration von mindestens 5 g/l, vorzugsweise 10 bis 20 g/l. Es gibt keine obere Grenze, außer der, die verhindern würde, daß das Polymer in Lösung gehalten wird. Allgemein fällt für ein gegebenes Salz die Viskosität der Polymerlösung, wenn die Konzentration an diesem Salz wächst. Wenn das Wasser der Lagerstätte zum größeren Teil Natriumchlorid enthält, kann man also vorteilhafter Weise gemäß dem vorliegenden Verfahren eine Polymerlösung verwenden, deren Salzgehalt an Natriumchlorid höher ist als der Salzgehalt des Wassers der Lagerstätte.

Es hat sich weiterhin gezeigt, daß ein erhöhter Salzgehalt im allgemeinen die Absorption des gelösten Polymers erhöht.
Diese Verbesserung der Absorption wird vor allem durch Zusatz von Erdalkalimetallsalzen erreicht.

Die Wirksamkeit des Verfahrens kann vergrößert werden, wenn man die Bildung von Agglomeraten begünstigt, z.B. indem man das Copolymer in Gegenwart von Formol und Sauerstoff auflöst oder indem man während des Einbringens mechanische Scherung im Innern der Lösung mit Hilfe der Geschwindigkeit ausübt.

Die Art der Einbringung der Polymerlösung ist an sich nicht neu. Man kann sich z.B. auf die Erläuterungen in der US-A 3 308 885 beziehen. Allgemein gesagt, übt man auf die Polymerlösung einen Druck aus, der größer ist als der Druck, der von den Fluiden, wie Lagerstättenwasser, Öl und Kohlenwasserstoffgas in der Lagerstätte ausgeübt wird, die für die Behandlungsweise gewählt wird (Lagerstättendruck). Dies ermöglicht es der Lösung in die Lagerstätte bis zu bemerkenswerten Entfernungen von der Bohrung einzudringen, vorzugsweise von mindestens 20 m unter den oben genannten Verhältnissen.

Die wasserlöslichen Copolymere werden bevorzugt zur Verringerung oder vollständigen Einstellung des Wasserflusses bei Bohrungen in Sandstein, Carbonatgestein oder Silikatgestein eingesetzt.
Durch eine Modifizierung der eingesetzten Copolymere kann die Absorptionsfähigkeit des Polymers an den vorhandenen Gesteinstypus angepaßt werden. Durch eine sogenannte anionische Modifizierung der eingesetzten Polymere läßt sich die Absorption von carbonathaltigen Gesteinen verbessern. Eine anionische Modifizierung wird üblicherweise durch einen erhöhten Anteil an Struktureinheiten der Formel I und insbesondere der Formel III in Polymeren erreicht.
Durch eine sogenannte kationische Modifizierung der eingesetzten Polymeren läßt sich die Absorption an silikathaltigen Gesteinen verbessern. Eine kationische Modifizierung wird üblicherweise durch einen erhöhten Anteil an Struktureinheiten der Formel IV in Polymeren erreicht.
Ein erhöhter Anteil liegt im Bereich oberhalb 40 Gew.-%, bevorzugt 50-80 Gew.-% der Struktureinheiten der Formeln II, III und IV.

Der vorteilhafte Einsatz der wasserlöslichen Copolymere zeigt sich auch im Hinblick auf eine hohe Wirksamkeit der Copolymeren infolge eines elastischen Dehn/Stauchverhaltens gerade in adsorbiertem Zustand, in einer ausgezeichneten Stabilität gegenüber Salzen in Lagerstättenwasser und über einen breiten Temperaturbereich, insbesondere bei hohen Temperaturen.

Die nachfolgenden Untersuchungen belegen die Wirksamkeit der wasserlöslichen Copolymere auf den Fließwiderstand von Salzwasser und Gas in einem porösen Medium. Bei dem verwendeten Gas handelt es sich um Stickstoff, der als Ersatz für Erdgas dient. Als poröse Medien werden Vogesen-Sandstein mit einer Durchlässigkeit K = 53 mD ($53 \cdot 10^{-15} m^2$) und Oberkirchner Sandstein mit einer Durchlässigkeit K = 5,4 mD ($5{,}4 \cdot 10^{-15} m^2$) verwendet. Als "Lagerstättenwasser" und gleichzeitig als Lösungsmittel für die Copolymeren dient eine wäßrige Lösung mit einem Salzgehalt von 97,5 g NaCl und 2,5 g $CaCl_2$ pro 100 g Wasser. Als Copolymere werden ®Hostamer und ®Hostadrill (Hersteller: Hoechst AG, DE) eingesetzt.

Die Untersuchungen gliedern sich in folgende Teilschritte:

- Messung der Durchlässigkeit für Stickstoff des wasserfreien Gesteinskerns $k_1$
- Aufsättigung des porösen Mediums mit "Lagerstättenwasser" (= Porenwasser); Bestimmung des Druckgradienten $\frac{\Delta p_1}{l}$ für den Fluß von Wasser mit konstanter Rate $q_1$
- Aufsättigung des porösen Mediums mit einer wäßrigen Copolymerlösung;
- Verdrängung der überschüssigen Copolymerlösung durch "Lagerstättenwasser" bis ein Gleichgewicht zwischen diesem Porenwasser und dem adsorbierenden Copolymer besteht. Messung des Druckgradienten $\frac{\Delta p_2}{l}$ für Wasser bei Fließrate $q_1$ in Gegenwart des adsorbierten Polymers
- Verdrängen des Wassers mit Stickstoff und Messung der Durchlässigkeit für Stickstoff in Gegenwart des adsorbierten Polymers $k_2$

Im Anschluß an diese vorbereitenden Arbeitsgänge, die dem Fachmann in der Ausführung geläufig sind und deswegen nicht näher erläutert werden müssen, erfolgt die Bestimmung des residuellen Fließwiderstandes für das "Lagerstättenwasser" und den Stickstoff.

$$RRF_W = \frac{\Delta p_2}{\Delta p_1} \qquad RRF_G = \frac{k_1}{k_2}$$

Es bedeuten:

- k: Durchlässigkeit des Gesteins, abhängig von der Porengröße, [Darcy] 1 $\mu m^2$ = 1 Darcy
- RRF: residueller Widerstandsfaktor (Residual Resitance Factor)
- $RRF_W$: Widerstandsfaktor des Lagerstättenwasser
- $RRF_G$: Widerstandsfaktor des Gases (Stickstoff)
- l: Länge des Gesteinskerns [m]
- p: Druckabfall über dem Kern [Pa]
- q: Fließrate des Wassers [$m^3 s^{-1}$]

Figuren 1 und 2 zeigen die Adsorptionswirkung von ®Hostamer und den daher rührenden residuellen Widerstandsfaktor für Wasser und Stickstoff an Vogesen-Sandstein (Fig. 1) und Oberkirchner Sandstein (Fig. 2). Während der RRF-Wert für Gas bis zu einer Polymerkonzentration von 750 mg/l annähernd konstant bleibt, steigt dieser für Wasser auf den 6-fachen Wert (Fig. 1). Figur 2 zeigt die resultierenden Ergebnisse in Oberkirchner Sandstein. Im Vergleich zu dem Vogesen-Sandstein verringert sich die kritische Polymerkonzentration von 750 mg/l auf 250 mg/l, was auf die geringe Permeabilität des Sandsteins zurückzuführen ist.

Figuren 3 und 4 zeigen die ermittelten Ergebnisse für ®Hostadrill in Vogesen und Oberkirchner Sandstein. Es hat sich gezeigt, daß zur Erreichung der gleichen Adsorptionswirkung eine höhere Polymerkonzentration erforderlich ist.

Das erfindungsgemäße Verfahren wurde in Feldversuchen an der Produktionsbohrung eines Erdgasfeldes in Norddeutschland mit großem Erfolg eingesetzt. Die Injektion wurde in eine Gasbohrung (Temperatur 130°C, Salzgehalt 300 g Formationssalze/l Wasser, mittlere Permeabilität 10 mDarcy) durchgeführt. Es wurden 200 $m^3$ ®Hostamer V 3212 (Polymerkonzentration 1 g/l) eingesetzt, der Salzgehalt der Polymerlösung betrug 180 g NaCl/l Wasser. Die Polymerlösung wurde mit einer konstanten Injektionsrate unter dem Frakdruck der Lagerstätte injiziert. Durch Einsatz der erfindungsgemäßen Copolymerlösung konnte die zum Stillstand gekommene Gasproduktion auf 100 000 $m^3$/Tag gesteigert werden, die Wasserproduktion (Kondenswasser) betrug 1$m^3$/Tag.

**Patentansprüche**

1. Verfahren zur Verringerung oder vollständigen Einstellung der Wasserzuflüsse aus einer Lagerstätte in mindestens einem Teil einer Bohrung zur Gewinnung von Öl und/oder Kohlenwasserstoffgas, die eine Lagerstätte durchquert, wobei man ausgehend von der Bohrung in den Teil der Lagerstätte, in dem man die Wasserzuflüsse reduzieren oder einstellen will, eine wäßrige Lösung eines Copolymers einbringt und anschließend die Bohrung zur Gewinnung von Öl und/oder Kohlenwasserstoffgas in Betrieb nimmt, wobei die Fluiden, die in der Lagerstätte vorhanden sind mit dem genannten das adsorbierte Copolymer enthaltenden Teil der Lagerstätte in Kontakt kommen und das Öl und/oder Kohlenwasserstoffgas diesen Teil der Lagerstätte durchströmt und in die Bohrung gelangt, während der Durchgang der Lagerstätte reduziert wird, dadurch gekennzeichnet, daß die wäßrige Lösung ein Copolymer enthält, das

   5 - 90 Gew..-% Struktureinheiten der Formel

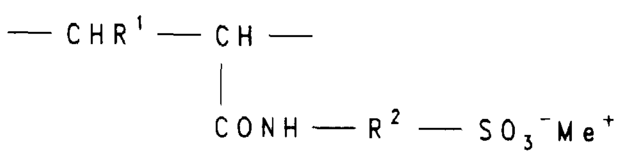

(I)

worin

- $R^1$ Wasserstoff oder Methyl,
- $R^2$ $C_2$-$C_{10}$-Alkylen, bevorzugt $C_2$-$C_6$-Alkylen, besonders bevorzugt $C_4$-Alkylen und
- Me Ammonium oder ein Alkalimetallion bedeutet,

5 - 95 Gew.-% Struktureinheiten der Formel

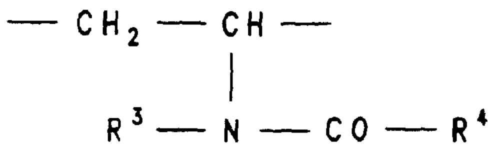

(II)

worin

$R^3$ und $R^4$ unabhängig voneinander Wasserstoff, Methyl oder Ethyl bedeuten oder $R^3$ und $R^4$ zusammen eine Propylengruppe, die unter Einschluß eines Restes

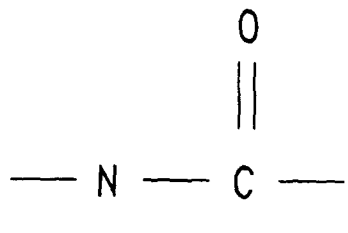

einen Pyrrolidonrest bildet, bedeutet,

0 - 90 Gew.-% Struktureinheiten der Formel

$$— CH = CH — CH_2 — \overset{+}{N}R^5R^6 — CH_2 — CH = CH — X^- \qquad \text{(III)}$$

worin

X ein Halogen, vorzugsweise Chlorid

$R^5$ und $R^6$ unabhängig voneinander $C_1$-$C_6$-Alkyl, vorzugsweise $C_1$-$C_3$-Alkyl, insbesondere Methyl oder Ethyl bedeuten und

0 - 90 Gew.-% Struktureinheiten der Formel

$$— CHR^7 — CHR^8 — \qquad \text{(IV)}$$

worin

$R^7$ Wasserstoff oder Methyl und

$R^8$ $CONH_2$, $CON(CH_3)_2$, Cyano, $SO_3H$, $SO_3Me$, $C_6H_4SO_3H$, $C_6H_4SO_3Me$, $CH_2SO_3H$, $CH_2SO_3Me$, COOH, COOMe oder eine Estergruppe COOR bedeuten, wobei R für $C_1$-$C_{15}$-Alkyl, vorzugsweise $C_1$-$C_8$-Alkyl steht, enthält.

**2.** Verfahren nach Anspruch 1, dadurch gekennzeichnet, daß kationisch modifizierte Copolymere mit einem erhöhten Anteil an Struktureinheiten der Formeln (II) und/oder (III), die sich durch eine erhöhte Adsorption an carbonathaltigen Gesteinen auszeichnen, eingesetzt werden.

**3.** Verfahren nach Anspruch 1, dadurch gekennzeichnet, daß anionisch modifizierte Copolymere mit einem erhöhten Anteil an Struktureinheiten der Formel (IV), worin $R^8$ $SO_3H$, $SO_3Me$, $C_6H_4SO_3H$, $C_6H_4SO_3Me$, $CH_2SO_3H$ und $CH_2SO_3Me$ ist und die sich durch eine erhöhte Adsorption an sulfathaltigen Gesteinen auszeichnen, eingesetzt werden.

**4.** Verfahren nach Anspruch 1, dadurch gekennzeichnet, daß die eingesetzten Copolymere aus 40 - 90 Gew.-% Struktureinheiten der Formel (I), 10 - 60 Gew.-% Struktureinheiten der Formel (II) und gegebenenfalls 0 - 40 Gew.-% Struktureinheiten der Formel (III) bestehen.

**5.** Verfahren nach Anspruch 1, dadurch gekennzeichnet, daß die eingesetzten Copolymere aus 40 - 70 Gew.-%

2-Acrylamido-2-methyl-propansulfonsäure, 1 - 30 Gew.-% Vinylacetamid und 0 - 60 Gew.-% Acrylamid bestehen.

6. Verfahren nach Anspruch 1, dadurch gekennzeichnet, daß die eingesetzten Copolymere aus 5 - 60 Gew.-% 2-Acrylamido-2-methyl-propansulfonsäure oder Vinylsulfonsäure, 2 - 20 Gew.-% Vinylacetamid und 45 - 90 Gew.-% Acrylamid bestehen.

7. Verfahren nach einem der Ansprüche 1 bis 6, dadurch gekennzeichnet, daß Copolymere mit einem Molekulargewicht von 50 000 bis $20 \cdot 10^6$ eingesetzt werden.

8. Verfahren nach einem der Ansprüche 1 bis 7, dadurch gekennzeichnet, daß die wäßrige Lösung des Copolymers eine Konzentration von 100 bis 20 000 ppm in Gewichtsteilen besitzt.

9. Verfahren nach einem der Ansprüche 1 bis 8, dadurch gekennzeichnet, daß die wäßrige Lösung des Copolymers einen höheren Salzgehalt als das Lagerstättenwasser besitzt.

10. Verwendung von wäßrigen Lösungen eines Copolymers enthaltend die Struktureinheiten gemäß Anspruch 1 zur Verringerung oder vollständigen Einstellung der Wasserzuflüsse einer Lagerstätte in mindestens einem Teil einer Bohrung, die eine Lagerstätte durchquert, zur Gewinnung von Öl und/oder von Kohlenwasserstoffgas.

**Claims**

1. A method for reducing or completely stopping the water inflows from a deposit in at least a portion of a borehole for the extraction of oil and/or hydrocarbon gas, which borehole traverses a deposit, an aqueous solution of a copolymer being introduced, starting from the borehole, into that portion of the deposit in which the water inflows are to be reduced or stopped, and the borehole subsequently being put into service for the extraction of oil and/or hydrocarbon gas, the fluids present in the deposit coming into contact with said portion of the deposit containing the adsorbed copolymer, and the oil and/or hydrocarbon gas flowing through said portion of the deposit and reaching the borehole, while the passage of the deposit is reduced, wherein the aqueous solution contains a copolymer which comprises
5-90% by weight of structural units of the formula

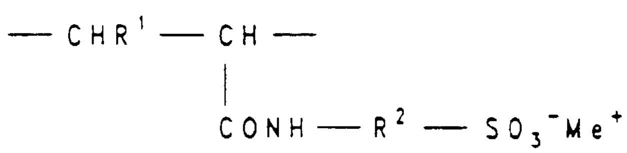

(I)

in which

$R^1$ is hydrogen or methyl,
$R^2$ is $C_2$-$C_{10}$-alkylene, preferably $C_2$-$C_6$-alkylene, especially preferably $C_4$-alkylene and
Me is ammonium or an alkali metal ion,

5-95% by weight of structural units of the formula

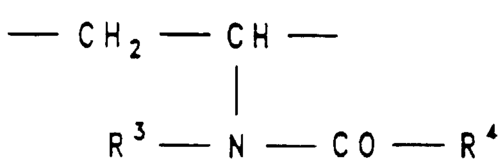

(II)

in which
$R^3$ and $R^4$, independently of one another, are hydrogen, methyl or ethyl, or $R^3$ and $R^4$ together are a propylene group which, with the inclusion of a radical

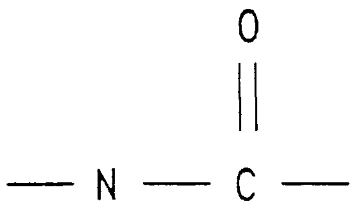,

forms a pyrrolidone radical,
0-90% by weight of structural units of the formula

$$-CH=CH-CH_2-\overset{+}{N}R^5R^6-CH_2-CH=CH-X^- \qquad (III)$$

in which

X is a halogen, preferably chloride
$R^5$ and $R^6$, independently of one another, are $C_1$-$C_6$-alkyl, preferably $C_1$-$C_3$-alkyl, especially methyl or ethyl and

0-90% by weight of structural units of the formula

$$-CHR^7-CHR^8- \qquad (IV)$$

in which

$R^7$ is hydrogen or methyl and
$R^8$ is $CONH_2$, $CON(CH_3)_2$, cyano, $SO_3H$, $SO_3Me$, $C_6H_4SO_3H$, $C_6H_4SO_3Me$, $CH_2SO_3H$, $CH_2SO_3Me$, COOH, COOMe or an ester group COOR, R being $C_1$-$C_{15}$-alkyl, preferably $C_1$-$C_8$-alkyl.

**2.** The method as claimed in claim 1, wherein cationically modified copolymers having an increased proportion of structural units of the formulae (II) and/or (III) are used which are notable for enhanced adsorption on carbonate-containing rocks.

**3.** The method as claimed in claim 1, wherein anionically modified copolymers having an increased proportion of structural units of the formula (IV), in which $R^8$ is $SO_3H$, $SO_3Me$, $C_6H_4SO_3H$, $C_6H_4SO_3Me$, $CH_2SO_3H$ and $CH_2SO_3Me$ are used which are notable for enhanced adsorption on sulfate-containing rocks.

**4.** The method as claimed in claim 1, wherein the copolymers used comprise 40-90% by weight of structural units of the formula (I), 10-60% by weight of structural units of the formula (II) and, if desired, 0-40% by weight of structural units of the formula (III).

**5.** The method as claimed in claim 1, wherein the copolymers used comprise 40-70% by weight of 2-acrylamido-2-methylpropanesulfonic acid, 1-30% by weight of vinylacetamide and 0-60% by weight of acrylamide.

**6.** The method as claimed in claim 1, wherein the copolymers used comprise 5-60% by weight of 2-acrylamido-2-methylpropanesulfonic acid or vinylsulfonic acid, 2-20% by weight of vinylacetamide and 45-90% by weight of acrylamide.

**7.** The method as claimed in any one of claims 1 to 6, wherein copolymers having a molecular weight from 50,000 to $20 \cdot 10^6$ are used.

**8.** The method as claimed in any one of claims 1 to 7, wherein the aqueous solution of the copolymer has a concentration from 100 to 20,000 ppm in parts by weight.

**9.** The method as claimed in any one of claims 1 to 8, wherein the aqueous solution of the copolymer has a higher

salt content than the deposit water.

**10.** Use of aqueous solutions of a copolymer containing the structural units as claimed in claim 1 for reducing or completely stopping the water inflows from a deposit in at least a portion of a borehole which traverses a deposit, for the extraction of oil and/or of hydrocarbon gas.

## Revendications

**1.** Procédé de réduction ou de régulation totale des affluences d'eau à partir d'un gisement dans au moins une partie d'un forage pour la récupération de pétrole brut et/ou d'hydrocarbures gazeux, qui traverse un gisement, en introduisant, en partant du forage, dans la partie du gisement où l'on souhaite réduire ou régler les affluences d'eau, une solution aqueuse d'un copolymère et ensuite on exploite le forage pour récupérer du pétrole et/ou des hydrocarbures gazeux, les fluides présents dans le gisement entrent alors en contact avec ladite partie du gisement contenant le copolymère adsorbé et le pétrole brut et/ou l'hydrocarbure gazeux traverse cette partie du gisement et parvient au forage, tandis que le passage par le gisement est réduit, caractérisé en ce que la solution aqueuse contient un polymère, qui contient de 5 à 90 % d'unités structurelles de formule

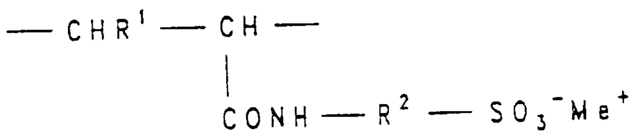

(I)

où

$R^1$ représente un atome d'hydrogène ou un groupe méthyle,
$R^2$ représente un groupe alkylène en $C_2$-$C_{10}$, de préférence un groupe alkylène en $C_2$-$C_6$, particulièrement préféré un groupe alkylène en $C_4$
et
Me représente un ammonium ou un ion de métal alcalin,

de 5 à 95 % en poids d'unités structurales de formule

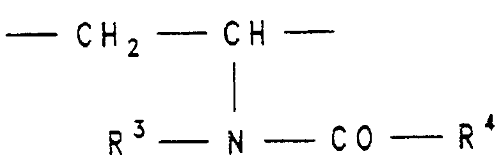

(II)

où

$R^3$ et $R^4$, indépendamment l'un de l'autre, représentent un atome d'hydrogène, un groupe méthyle ou éthyle ou
$R^3$ et $R^4$ ensemble représentent un groupe propylène, qui forme en englobant un reste

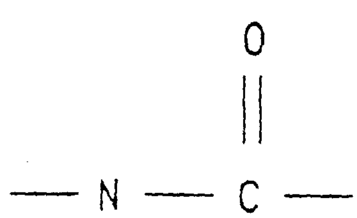

un reste pyrrolidone,

de 0 à 90 % en poids d'unités de structure de formule

$$— CH = CH — CH_2 — \overset{+}{N}R^5R^6 — CH_2 — CH = CH — X^- \quad (III)$$

où

X représente un atome d'halogène, de préférence un chlorure
$R^5$ et $R^6$, indépendamment l'un de l'autre, représentent un groupe alkyle en $C_1$-$C_6$, de préférence un groupe alkyle en $C_1$-$C_3$, en particulier un groupe méthyle ou éthyle et

de 0 à 90 % en poids d'unités structurelles de formule

$$— CHR^7 — CHR^8 — \quad (IV)$$

où

$R^7$ représente un atome d'hydrogène ou un groupe méthyle et
$R^8$ $CONH_2$, $CON(CH_3)_2$, cyano, $SO_3H$, $SO_3Me$, $C_6H_4SO_3H$, $C_6H_4SO_3Me$, $CH_2SO_3H$, $CH_2SO_3Me$, COOH, COO-Me ou un groupe ester COOR, R représentant un groupe alkyle en $C_1$-$C_{15}$, de préférence un groupe alkyle en $C_1$-$C_8$.

**2.** Procédé selon la revendication 1, caractérisé en ce qu'on utilise des copolymères modifiés en forme cationique avec un taux élevé en unités de structure de formule (II) et/ou (III), qui sont caractérisés par une adsorption élevée en roches contenant du carbonate.

**3.** Procédé selon la revendication 1, caractérisé en ce qu'on utilise des copolymères modifiés en forme anionique avec un taux élevé d'unités de structure de formule (IV), où $R^8$ est $SO_3H$, $SO_3Me$, $C_6H_4SO_3H$, $C_6H_4SO_3Me$, $CH_2SO_3H$ et $CH_2SO_3Me$ et qui sont caractérisés par une adsorption élevée de roches contenant des sulfates.

**4.** Procédé selon la revendication 1, caractérisé en ce que les copolymères utilisés sont constitués de 40 à 90 % en poids d'unités de structure de formule (I), de 10 à 60 % en poids d'unités de structure de formule (II) et éventuellement de 0 à 40 % en poids d'unités de structure de formule (III).

**5.** Procédé selon la revendication 1, caractérisé en ce que les polymères utilisés sont constitués de 40 à 70 % en poids d'acide 2-acrylamido-2-méthyl-propanosulfonique, de 1 à 30 % en poids d'acétamide de vinyle et de 0 à 60 % en poids d'acrylamide.

**6.** Procédé selon la revendication 1, caractérisé en ce que les copolymères utilisés sont constitués de 5 à 60 % en poids d'acide 2-acrylamido-2-méthyl-sulfonique ou d'acide vinylsulfonique, de 2 à 20 % en poids de vinylacétamide et de 45 à 90 % en poids d'acrylamide.

**7.** Procédé selon l'une des revendications de 1 à 6, caractérisé en ce qu'on utilise des copolymères avec une masse molaire de 50000 à $20.10^6$.

**8.** Procédé selon l'une des revendications 1 à 7, caractérisé en ce que la solution aqueuse du copolymère a une concentration de 100 à 20000 ppm en parties de poids.

**9.** Procédé selon l'une des revendications 1 à 8, caractérisé en ce que la solution aqueuse du copolymère a une teneur en sel plus élevée que l'eau de gisement.

**10.** Utilisation de solutions aqueuses d'un copolymère contenant les unités structurelles selon la revendication 1 pour la réduction ou la régulation totale d'affluences d'eau dans un gisement dans au moins une partie d'un forage, qui traverse un gisement, pour la récupération de pétrole et/ou d'hydrocarbures gazeux.

Fig. 1

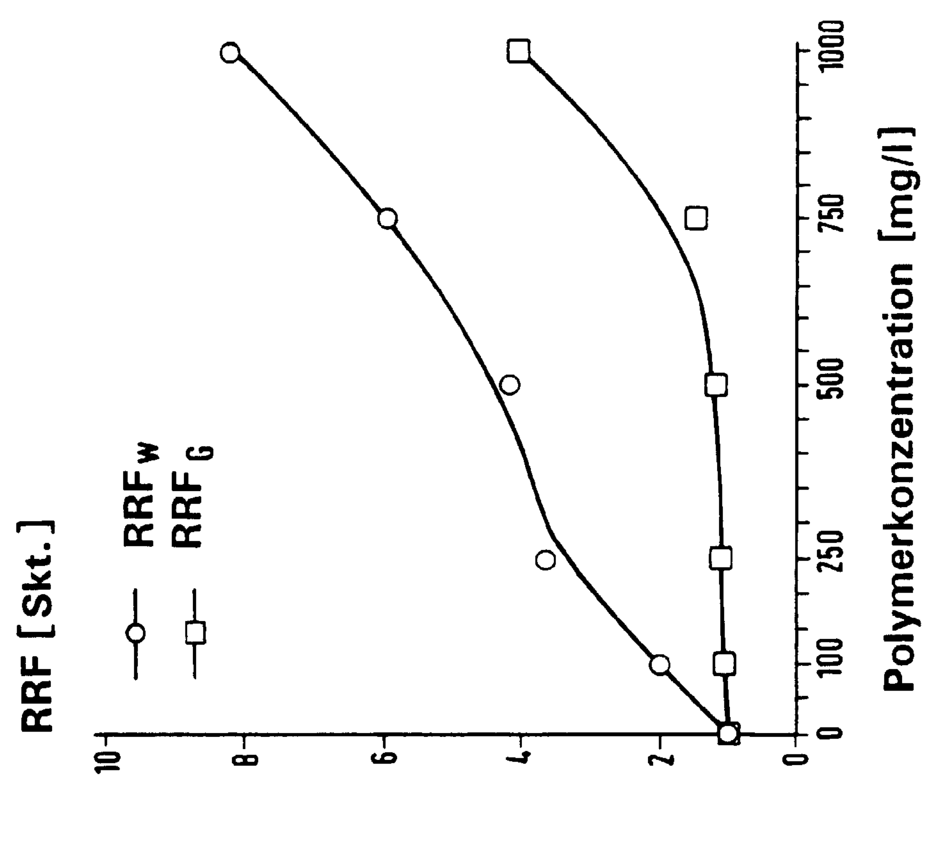
RRF [Skt.]
RRF_W
RRF_G
0
2
4
6
8
10
0
100
250
500
750
1000
Polymerkonzentration [mg/l]

Fig. 2

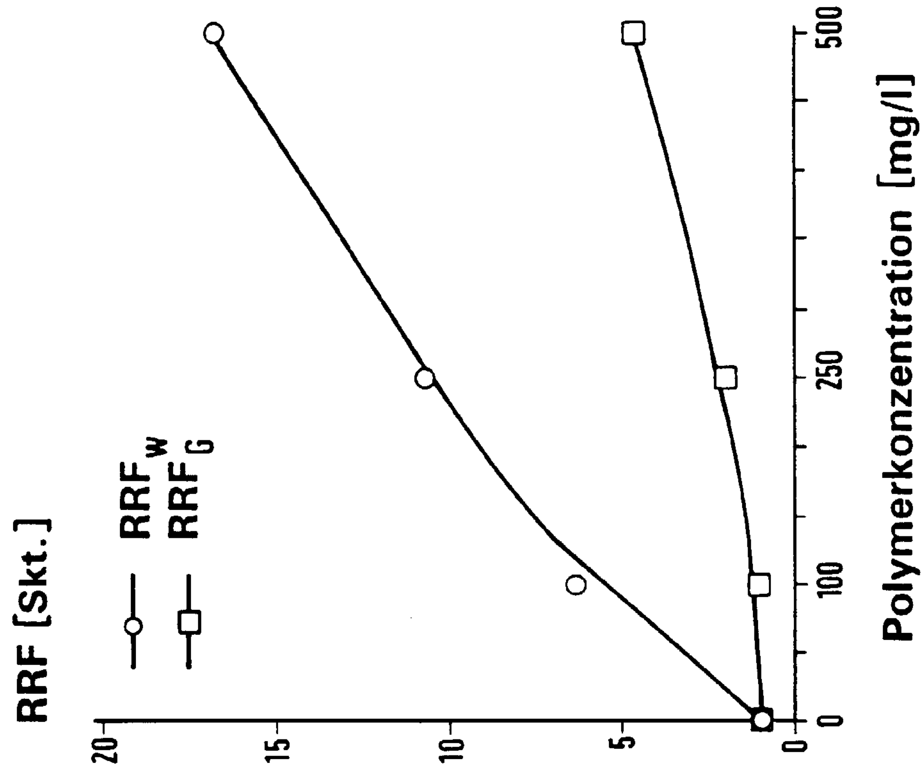
RRF [Skt.]
RRF_W
RRF_G
0
5
10
15
20
0
100
250
500
Polymerkonzentration [mg/l]

Fig. 3

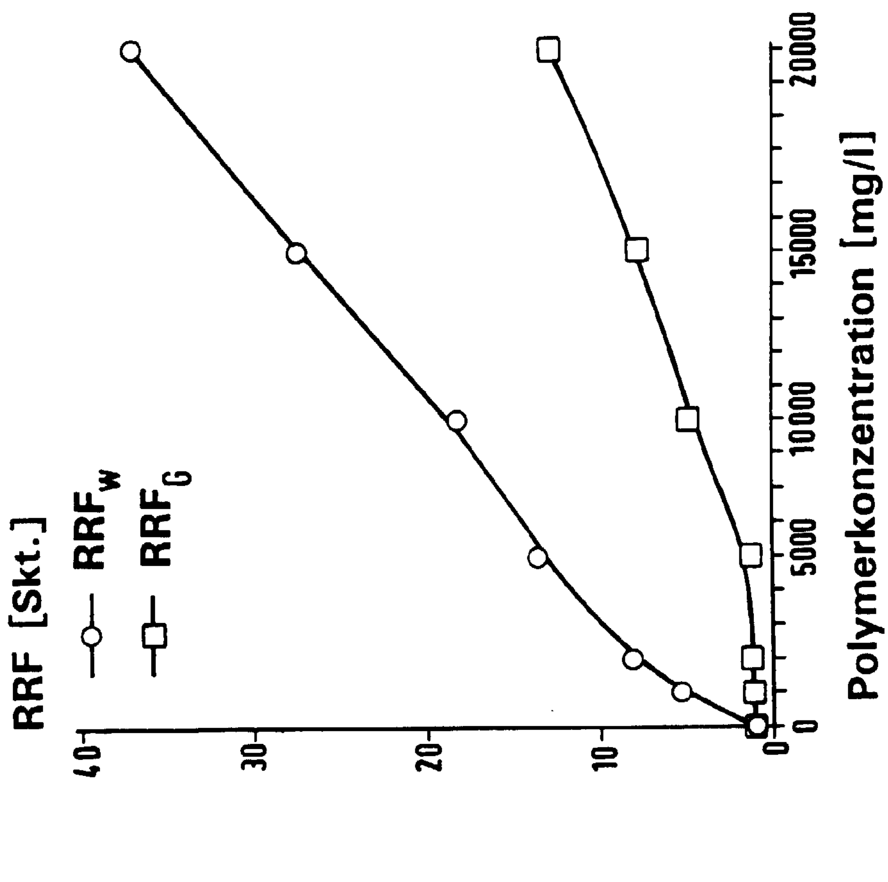
RRF [Skt.]
RRF$_W$
RRF$_G$
0
10
20
30
40
0
5000
10000
15000
20000
Polymerkonzentration [mg/l]

Fig. 4

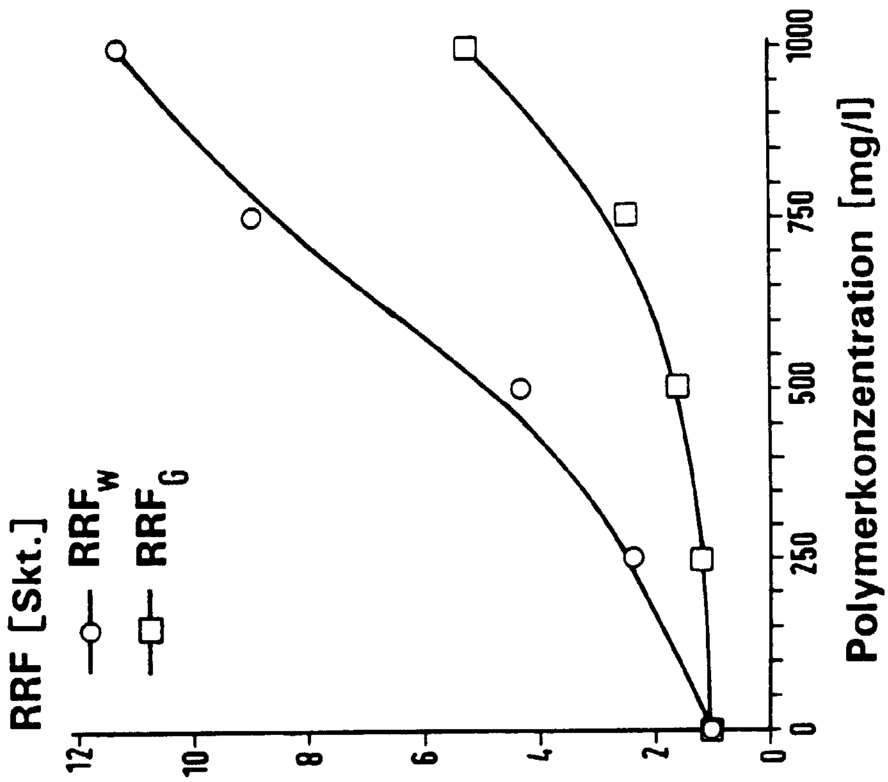
RRF [Skt.]
RRF$_W$
RRF$_G$
0
2
4
6
8
10
12
0
250
500
750
1000
Polymerkonzentration [mg/l]